# EUROPEAN PATENT SPECIFICATION

(11) **EP 2 375 658 B1**
(45) Date of publication and mention of the grant of the patent: **15.01.2014**
(21) Application number: 11161542.3
(22) Date of filing: 07.04.2011
(51) Int. Cl.: H04W 28/02, H04L 12/801, H04L 12/823, H04L 12/911, H04L 12/927

(54) **Traffic congestion in radio network controllers**
Verkehrsstau in Funknetzwerksteuerungen
Congestion de trafic dans des contrôleurs de réseau radio

(30) Priority: 07.04.2010 ES 201030504
(43) Date of publication of application: 12.10.2011
(73) Proprietor: Vodafone Group PLC, Newbury Berkshire RG14 2FN (GB); Vodafone España, S.A.U., 28108 Alcobendas (ES)
(72) Inventor: De Pasquale, Andrea, E-28050 Madrid (ES); Dominguez Romero, Francisco, E-28050 Madrid (ES)
(74) Representative: Boult Wade Tennant

(56) References cited:
- EP-A1- 1 672 845
- EP-A1- 2 154 837
- WO-A1-2008/054065
- US-A1- 2008 104 377
- J. SINGH: "Performance aspects of enhanced radio resource management with QoS differentiation in UMTS network", 6TH IEE INTERNATIONAL CONFERENCE ON 3G AND BEYOND (05/11182), vol. 2005, 1 January 2005 (2005-01-01), pages 161-165, XP55000967, DOI: 10.1049/cp:20050212
- NADAS S ET AL: "HSUPA Transport Network Congestion Control", 2008 IEEE GLOBECOM WORKSHOPS; 30 NOV.-4 DEC. 2008; NEW ORLEANS, LA, USA, IEEE, PISCATAWAY, NJ, USA, 30 November 2008 (2008-11-30), pages 1-6, XP031405631, ISBN: 978-1-4244-3061-1

## Description

### TECHNICAL FIELD OF THE INVENTION

The present invention has its application within the telecommunications sector and, especially, in the industrial area engaged in providing Radio Access Networks (RANs) with elements of cellular infrastructures such as Radio Network Controllers (RNCs) for Third Generation (3G) wireless communications systems supporting High-Speed Packet Access (HSPA) or Evolved High-Speed Packet Access (HSPA+).

More particularly, the invention described herein relates to a method and a RNC for handling (reducing) traffic congestion in such RANs.

### BACKGROUND OF THE INVENTION

Packet switching (PS) traffic in mobile telecommunications networks has risen dramatically in recent years: so too has the take up of mobile applications and the usage of 3G RANs with the introduction of new technologies (HSPA, HSPA+) as a radio carrier for Mobile Broadband traffic. This PS traffic growth leads to problems of congestion, not only on the air interface (Uu) to the user equipment (UE) and the lub interface between the 3G base station (i.e., Node B) and the radio network controller (RNC), but also the processing means inside the RNC can get congested when handling the user traffic (and the signalling associated to PS connections).

A possible solution consists of addressing the traffic increase with an increase in RNC User Plane capacity (in other words, introducing more RNC components). This is unattractive as the large concomitant increase in network capacity spending (i.e. CAPEX) yields little increase in service revenues, since the main economical model for billing users of PS services is usually based on Flat Rate Tariff or sub-versions of this rate. At the same time, the high data rates supported by HSPA, HSPA+ are increasing the throughput achievable by the users.

Moreover, overload measures within RNC are applied to all types of traffic regardless of their value to the user or the network operator; as these measures are normally oriented to protect RNC functioning. Consequently, they affect valuable and non valuable traffic in the same way.

On the other hand, Quality of Service (QoS) differentiation is currently applied in other unrelated parts of cellular telecommunications networks, as for instance: the Uu and lub interfaces and the transport networks. EP-2154837 discusses one such approach. In this context, the term "Quality of Service (QoS) differentiation" refers to the ability to provide different treatment to different classes of traffic (or service), depending on their respective QoS profiles. A QoS profile represents a set of guarantees, which are required by a particular class of traffic/service on a set of QoS parameters.

However, when the bottleneck is the RNC there is no QoS differentiation but all the users and traffic are treated in the same way.

US-2008/104377 relates to a method for processor overload control in a wireless or other network. A processor occupancy level is monitored and compared to a target value. If the measured value exceeds the target value, one or more network load sources are controlled to reduce the data load of the processing unit. The load sources are controlled according to differentiated QoS levels, wherein non delay-critical data flows are reduced before delay-critical data flows.

"Performance aspects of enhanced radio resource management with QoS differentiation in UMTS network" by Singh et al (3G and beyond, 2005 6 IEEE International Conference on) relates to supporting multiple traffic classes with different QoS constraints in a UMTS system. Radio resource management (RRM) strategies with user/service differentiation are realised in order to exploit the spectrum in an efficient way under a loaded multi-service scenario.

EP-1672845 relates to a rate control method for a wireless base station device. When congestion is detected, the data flow with the highest data rate is detected first and the rate of that data flow is reduced. In one embodiment, priority is considered in determining that reduction. Subsequently, other data flows are considered in order of their data rate level.

"HSUPA transport network congestion control" by Nadas et al (2008 IEEE Globecom Workshops) relates to flow control algorithms in a 3GPP phone work.

### SUMMARY OF THE INVENTION

The present invention provides a method for reducing traffic congestion in a radio network controller in accordance with claim 1.

This invention serves to solve the aforesaid problem by providing a radio network controller (RNC) with a method for dynamically reducing the traffic in the packet switching (PS) domain (packet traffic) of 3G wide area mobile networks in order to optimize resources for the User Plane as well as the Control Plane traffic handled by the RNC, so that the mobile network operators can save costs or postpone investments in RNC capacity.

For this purpose, the present proposal is based on the use of QoS differentiation parameters as a way to control the User Plane resources and Control Plane capacity of the RNC. Typically the following QoS profile parameters are specified, defining different traffic classes: Traffic Handling Priority, Maximum Bit-rate, Guaranteed Bit-rate and latency. Quality of Service (QoS) has so far been used as a method to control congestion in the (lub) interface with Node B, but has never been proposed to be used to address RNC Traffic.

Traffic load managed by the processing means of the RNC is measured by the RNC in both the User Plane and Control Plane (the RNC may have either a single processor controlling all the traffic or different processors handling portions of said traffic with one or more for the User Plane traffic and one or more for Control Plane traffic). Taking into account the managed traffic load measurements, the actual throughput of the users (UEs) served by this RNC and other different active parameters of their QoS profiles (e.g., QoS priority), the RNC can actively (i.e. dynamically) decrease the current traffic:
- In the RNC User Plane by reducing the traffic of the ongoing PS connections, starting from UEs with the lowest QoS priority (Bronze users) and which is using the highest throughput..
- In the RNC Control Plane by reducing the chance of establishing new PS connections for the UEs with the lowest QoS priority (Bronze users) and, if the RNC remains in a state where traffic congestion is determined to be unacceptably likely, going on in the same way with the other UEs in QoS priority order (Silver users and finally Gold users).

The reduction of User Plane traffic can be done for both Uplink and Downlink. Reducing the traffic of the ongoing PS connections is achieved by slowing down the TCP Protocols in said PS connections of the RNC.

In Downlink (DL), this can be performed by discarding Service Data Units (SDUs).

For Uplink (UL), similarly to High-Speed Downlink Packet Access (HSDPA) scheduler in DL, the RNC controls an UL packet scheduler for the Enhanced Dedicated Channel (E-DCH), which is a transport UL channel used in the 3G technologies (such as HSUPA: High-Speed Uplink Packet Access). The Node B controlled scheduling is based on UL and DL control together with a set of rules on the behaviour of the UE with respect to this scheduling. In the DL, a resource indication, known as Scheduling Grant (specified in 3GPP TS 25.309 V6.6.0), is required to indicate to the UE the maximum amount of UL resources it may use. The Node-B and the RNC shares the resource allocation tasks of the Enhanced dedicated transport channel (E-DCH). The UL scheduler is known to operate on a request-grant principle, where the user equipment (UE) or terminal requests permission to send data and the scheduler on the network side decides when and how many terminals are allowed to do so. The terminals for which permission is granted are addressed using an E-DCH Radio Network Temporary Identifier (E-RNTI) assigned by the RNC to each UE. The RNC typically establishes at least one E-DCH enabling UL data traffic with a determined maximum data rate requested from the UE to the Node-B. The physical channel used by E-DCH for the transmission of user data E-DCH is the E-DCH Dedicated Physical Data Control Channel (E-DPDCH) and channels associated with the E-DPDCH are controlled and decoded by the information carried over the E-DCH Dedicated Physical Control Channel (E-DPCCH). The Scheduling Grants, which can be sent once per TTI or slower, control the maximum allowed E-DPDCH/DPCCH power ratio of the active processes.

In order to reduce the User Plane traffic in UL, the RNC can decrease the number of scheduling grants, i.e., the number of occasions/opportunities in which permission to upload is granted to any given UE in E-DCH channels and the mechanism is similar to the one used in DL: starting the reduction of grants for those requests from UEs with the lowest priority of the QoS profiles and the highest throughput used. In accordance to the E-RNTIs corresponding to the UEs ordered in that way, the RNC associates the E-RNTI of a low priority UE with a lower throughput and sends this information to the Node B which takes it account when assigning the grants to the UE in E-DCH.

In the UL Control Plane, the RNC can reduce the signalling traffic by rejecting at least some requests for Radio Resource Control (RRC) connections for packet traffic of the Bronze UEs (with the lowest QoS priority), whilst congestion state at the RNC persists.

Thus, the invention aims to reduce the actual (data and control) packet traffic in RNC in a pragmatic way suited to RANs where continuous Internet connections are provided via flat tariffs over HSPA (High Speed Packet Access).

In accordance with an aspect of the invention there is provided, a method for reducing traffic congestion in a RNC, the RNC handling users' data traffic in a User Plane and signalling traffic in a Control Plane. The users send requests to the RNC for PS connection establishment; every connection is characterized by a certain priority dependent on user's QoS profile.

The method comprises a step of carrying out measurements of traffic load (e.g., average load in a determined time interval) in the RNC. In case that the measured value of traffic load exceeds a configurable load threshold, the traffic carried over established Packet Switched connections is reduced for each user in accordance with the QoS user profile. There are two criteria for performing this traffic reduction among the users: i) from the lowest value to the highest value of priority and ii) from the highest value to the lowest value of the average measured throughput. A combination, configurable by the mobile network operator, of both criteria i) and ii) is used.

Different values of traffic load can be measured in DL as well as in UL. The RNC takes measurements of data traffic load in the User Plane and, in addition, the RNC can measure signalling traffic load in the Control Plane, compares the measured value load of traffic load with respective configurable load thresholds and execute one or a combination of the following mechanism for reducing the User Plane load and the Control Plane load respectively (and in accordance to the traffic load comparison with the thresholds):
- If the measured value of traffic load in the User Plane exceeds a first load threshold which is compared with, the mechanism for reducing congestion in the RNC comprises reducing data traffic carried over established PS connections of the users with the lowest value of priority parameter and the highest value of the measured user throughput. If the measured value of traffic load in the User Plane exceeds a second load threshold, which is lower than first load threshold, the step of reducing data traffic carried over established PS connections continues following an order of the users according to the priority parameter of the QoS profiles from the lowest value to the highest value, until the updated measurement of the User Plane load reaches the second load threshold. If the User Plane load keeps equal to the second load threshold or below it for a certain time interval, the RNC stops the mechanism of reducing data traffic over the PS connections.
- In the RNC Control Plane, a comparison of a measured value of signaling traffic load with a control load threshold can be performed and, if the measured value of the Control Plane load exceeds the threshold, the mechanism for reducing congestion in the RNC comprises reducing the establishing of new PS connections requested by the users with the lowest value of priority parameter. The number of completed establishments of Packet Switched connections can be reduced by the RNC rejecting Radio Resource Control (RRC) connection requests for PS (Packet Switching) from the users for a determined time period which can depend on the requested QoS priority.

Note that in the User Plane, the traffic load is measured and compared with at least one load threshold by the RNC both in Downlink and in Uplink. For reducing data traffic over PS connections in Downlink, at least some service data units (SDUs) from users of TCP (Transport Control Protocol) are discarded in a ratio, which can be configured depending on the QoS priority of the user's traffic and can change (being increased or decreased) depending on the User Plane load in Downlink compared with a certain load threshold. For reducing data traffic over PS connections in Uplink, the grants in Enhanced Dedicated Channels allocated to users are reduced by the RNC in a configurable number, which can depend (as the previous parameters or factors described as configurable by the operator) on the priority of the QoS profile of the user and vary depending on the result from comparison of the measured value of traffic load in the User Plane in Uplink with respect to a certain load threshold.

Another aspect of the invention deals with a radio network controller (RNC) comprising processing means for performing the method described before.

A further aspect of the invention deals with a computer program comprising program code means which execute the method described before, when loaded into processing means of the radio network controller defined above,

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a simplified block diagram of the UMTS architecture as specified by 3GPP in prior art.
Figure 2 shows a schematic block diagram of the logical architecture, including User Plane and Control Plane, of the UMTS radio interface as specified by 3GPP TS 25.301 in prior art.
Figure 3 shows a flow chart of the method for reducing data traffic congestion in the User Plane of a RNC, in accordance to a preferred embodiment of the invention.

### DETAILED DESCRIPTION OF THE INVENTION

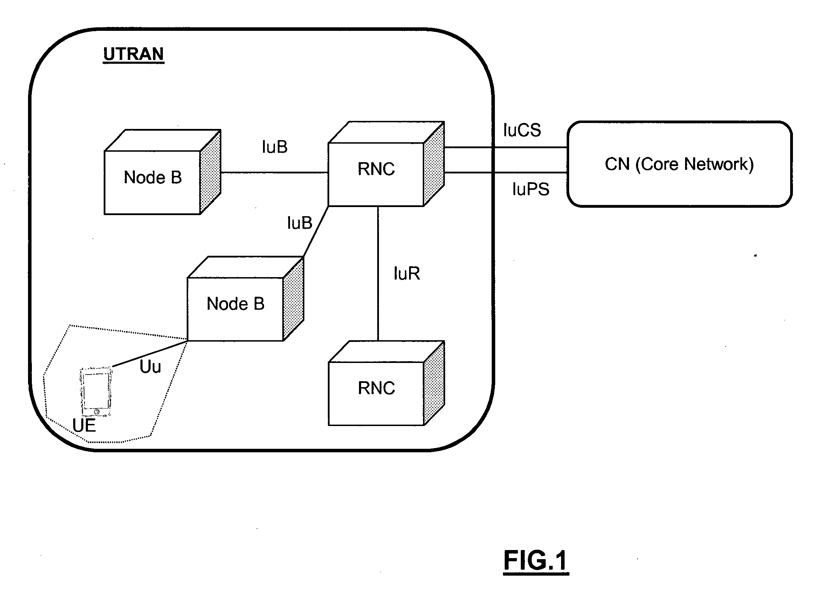

Figure 1 shows the UMTS open interfaces:
- lub: The lub interface connects the 3G base stations (Node B) to the radio network controller (RNC). The lub interface consists of a control plane and a user plane. The control plane of the lub interface is called NBAP: Node B application part, divided into common NBAP and dedicated NBAP depending on the signaling link used. The user plane lub protocol is defined via the frame realy protocol and defines the structures of the frames and inband control procedures for every type of transport channel.
- lur: The lur interface is defined for inter-RNC communication. The control plane protocol is referred to as RNSAP: radio network system application part) and operates over signalling protocol SS7, The user plane consists of the frame relay protocol and carried directly over AAL2.
- luCS and luPs: The lu interface connects the UMTS Terrestrial Radio Access Network (UTRAN) to the core network (CN). lu is further subdivided into: luCS, which is the lu interface that connects the radio network to the circuit switched (CS) core network; luPS, which is the lu interface connecting the radio network to the packet switched (PS) core network that comprises the GPRS supporting nodes. The lu interface has a control plane and a user plane component associated with it. ATM is the link-layer protocol that lu is originally specified over, but currently the lu interface can be run over IP. The lucs and luPs control plane run on top of SS7 and the control plane protocol consists of RANAP: radio access network application protocol which uses AAL5 as the ATM adaptation layer. Since voice is the primary service provided over the lucs interface, AAL2 has been selected as the adaptation layer for luCs. GPRS Tunneling Protocol over UDP/IP/AAL5 is the user plane for luPs.
- Uu: This is the radio interface between the UTRAN and the User Equipment (UE) utilizing CDMA.

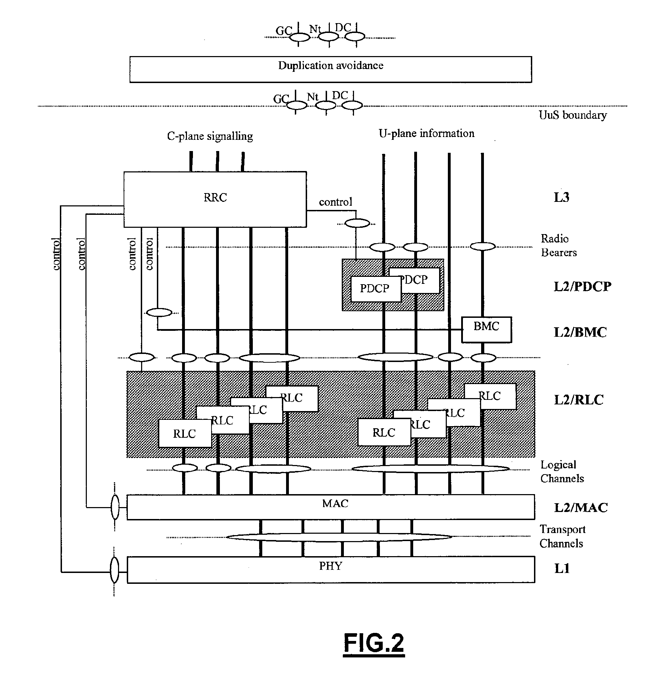

Figure 2 shows the protocol structure of the W-CDMA radio interface, which provides radio links between the User Equipment (UE) and the radio network side, carrying traffic of a User Plane (U-plane) containing user information to and from the users and signalling traffic constituting a Control Plane (C-plane) to maintain and control the radio links. The protocol structure consists of three layers: the network layer (L3), data link layer (L2) and physical layer (L1). The network layer (L3) has the radio resource control (RRC) as a sub-layer in an access stratum for Control Plane (C-plane). The data link layer (L2) has four sub-layers: the medium access control (MAC), radio link control (RLC), packet data convergence protocol (PDCP) and Broadcast/Multicast Control (BMC). The RLC and MAC are both used in the User Plane (U-plane) and the Control Plane (C-plane), while PDCP and BMC are used only in the User Plane (U-plane).

The proposed method can be implemented by the processor or plurality of processors handling the User Plane and Control Plane packets in a RNC of a 3G network which offers high data rates by HSPA or HSPA+ technologies, where the RNC is likely to become a bottleneck due to an increase of PS traffic.

In order to reduce the traffic of ongoing PS connections (User Plane), the following algorithms for slowing down TCP Protocols are implemented in the RNC, in DL and UL respectively:
- In Downlink, when the average RNC User Plane load exceeds an upper load threshold, the RNC starts discarding SDU packets sent across luPS interface. To perform this SDU discard function, the RNC starts from the PS connections having the lowest QoS priority. The algorithm is iterative until the traffic load in the RNC has decreased by a pre-determined amount of traffic.

Consider the following example of this discard function:
- Start discarding one SDU in every 10 for Bronze Users (the lowest QoS priority), other one in every 30 SDUs for Silver Users and one SDU in every 100 for Gold Users (the highest QoS priority).
- If after x seconds, the traffic load has not decreased, the ratio of discarded SDUs for all QoS classes (priority values: Bronze, Silver and Gold) is increased by a specific value. Discarded SDUs ratio can be different for each QoS class

When the average RNC Load can be maintained below a lower load threshold (lower than the upper load threshold), the amount of discarded SDUs is reduced again so that the RNC can be brought slowly to the initial situation (the measurement of traffic load is then updated and the RNC goes back in comparison with the load threshold).

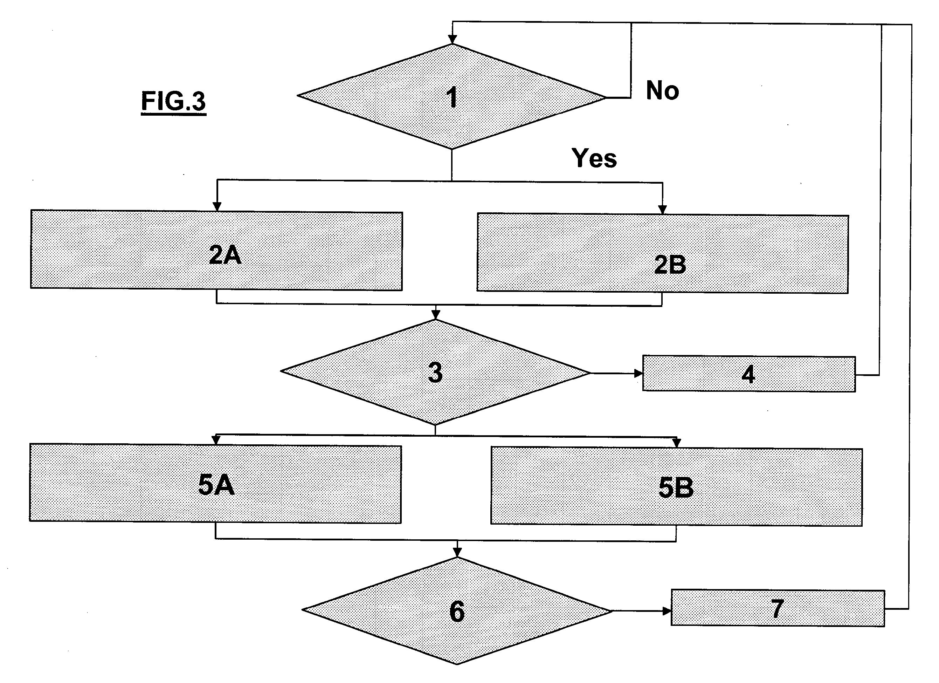

Figure 3 shows a possible example of implementation of the algorithm followed in order to reduce the traffic of User Plane in the RNC. The basic steps of the algorithm are:
(1) Comparison of a measured value of the User Plane traffic load in the RNC with an upper threshold. If the measured User Plane traffic load exceeds the upper threshold, then: User Plane traffic is reduced by discarding service data units in the following way:
(2A) First, for the Downlink traffic, discard one SDU every x SDUs for Bronze users; secondly, discard one SDU every y SDUs for Silver users and finally discard one SDU every z SDUs for Gold users;

In parallel, the Uplink traffic can be reduced by:
(2B) Downgrading 1/x % of Grants for Bronze users; downgrading 1/y % of Grants for Silver users and downgrading 1/z % of Grants for Gold users.
(3) Once the steps 2A and 2B are carried out, the User Plane traffic load is measured and compared again with the upper threshold and in the case the measured value keeps higher than the upper threshold, the algorithm goes on reducing the traffic of User Plane in the RNC by discarding more SDUs:
(5A) Discard of a number n of SDUs every x SDUs for Bronze users; discard of a number n of SDUs every y SDUs for Silver users and discard of a number n of SDUs every z SDUs for Gold users.

In addition, simultaneously, the algorithm continues unloading the Uplink traffic similarly order and ratio of SDUs:
(5B) Firstly, downgrading n/x % of Grants for Bronze users; second the Silver Users, downgrading n/y % of Grants for Silver users and, finally, the Gold users downgrading 1/z % of their Grants.
(6) The algorithm stops (4, 7) only if the current traffic load measured in the User Plane of the RNC is lower or equal than the upper threshold; otherwise, it continues comparing the current traffic load of the RNC with the threshold and acting consequently as explained in steps 2 and 5.

- In Uplink, the TCP Protocols slow down by decreasing the number of occasions in which permission to upload is granted to any given UE by the Node B, i.e., reducing the number of scheduling grants in E-DCH channels in accordance to the instructions from the RNC. The mechanism is similar to the Downlink but reducing the number of (absolute or relative) grants in the E-DCH instead of reducing the SDUs from the TCP.

In the RNC Control Plane, the control plane messages are managed for both Uplink and Downlink simultaneously, so the way of reducing traffic load by reducing the chance of establishing new PS connections is applicable to both UL and DL. Traffic congestion in the RNC Control Plane (for both Uplink and Downlink) is avoided by reducing the chance of establishing incoming PS connections request from the UEs starting with the requesting UEs having the lowest QoS priority (Bronze users). When the average RNC Control Plane load exceeds a High Load threshold, the RRC connection requests for PS (packet switching) from the Bronze users are rejected and the RRC connection reject message sent by the RNC to the Node B informs the UE that the rejection cause is congestion. The UE can retry to request a PS connection after a waiting time period (between 1 and 15 seconds as specified by the 3GPP). This waiting time period can be selected using a table in the RNC which maps each QoS class to a specific waiting time period during which the RRC connections are rejected in case that the traffic load in the Control Plane remains high.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for reducing traffic congestion in a Radio Network Controller, RNC, that handles data traffic in a User Plane and a Control Plane, the method comprising:
receiving at least one request for establishment of a respective Packet Switched connection from a respective user at the RNC, each user having a respective QoS profile with parameters including priority as well as an average measured throughput;
measuring a value of traffic load in the RNC;
comparing the measured value of traffic load with at least one load threshold (1), and,
if the measured value of traffic load exceeds the at least one load threshold, reducing the traffic carried over established Packet Switched connections for each user in accordance with an order of the users that follows a configurable combination of the QoS user profile from the lowest value to the highest value of priority and the average measured throughput from the highest value to the lowest value (2).

2. The method according to claims 1, wherein, if the measured value of traffic load in the User Plane is equal or below a second load threshold for a certain time interval, reducing traffic carried over established Packet Switched connections stops.

3. The method according to any of claims 1 or 2, wherein reducing traffic carried over established Packet Switched connections is performed in a Downlink and comprises discarding service data units from users of Transport Control Protocol in a configurable ratio.

4. The method according to claim 3, wherein the ratio of discarded service data units depends on the priority parameter of the QoS profile of the user.

5. The method according to any of claims 3 or 4, wherein the ratio of discarded service data units is increased or reduced by a specific value depending on the comparison of a certain load threshold with the value of traffic load in the User Plane measured in Downlink.

6. The method according to any of claims 1-5, wherein reducing traffic carried over established Packet Switched connections is performed in an Uplink and comprises decreasing scheduling grants in Enhanced Dedicated Channels allocated to users in a configurable number.

7. The method according to claim 6, wherein the number of scheduling grants depends on the priority parameter of the QoS profile of the user.

8. The method according to any of claims 6 or 7, wherein the number of scheduling grants is increased or reduced by a specific value depending on the comparison of the measured value of traffic load in the User Plane in Uplink with respect to a certain load threshold.

9. The method according to any preceding claim, wherein, if the value of traffic load is measured in the Control Plane of the RNC, and exceeds a control load threshold, reducing traffic carried over established Packet Switched connections comprising reducing the number of completed establishments of Packet Switched connections requested by the users with the lowest value of priority parameter.

10. The method according to claim 9, wherein reducing the number of complete establishments of Packet Switched connections comprises rejecting Radio Resource Control connection requests for Packet Switching from the users for a determined time period.

11. The method according to claim 10, wherein the time period is determined depending on the priority parameter of the QoS profile of the user.

12. A radio network controller comprising processing means configured to implement all of the steps of the method for reducing traffic congestion as set out in any previous claim.

13. The radio network controller according to claim 12, further comprising triggering means for triggering a HSPA scheduler in a Node B.

14. A computer program product comprising program code means which, when executed on processing means of a radio network controller, cause said processing means to execute all of the steps of the method according to any of claims 1-11.

## Patentansprüche

1. Verfahren zum Reduzieren von Verkehrsstau in einer Funknetzsteuerung RNC, die Datenverkehr in einer Benutzerebene und einer Steuerebene handhabt, wobei das Verfahren Folgendes beinhaltet:
Empfangen von wenigstens einer Anforderung zum Aufbauen einer jeweiligen paketgeschalteten Verbindung von einem jeweiligen Benutzer an der RNC, wobei jeder Benutzer ein jeweiliges QoS-Profil mit Parametern einschließlich Priorität sowie einen durchschnittlichen gemessenen Durchsatz hat;
Messen eines Verkehrslastwertes in der RNC;
Vergleichen des gemessenen Vekehrslastwertes mit wenigstens einem Lastschwellenwert (1), und
Reduzieren, wenn der gemessene Verkehrslastwert den wenigstens einen Lastschwellenwert übersteigt, des über aufgebaute paketgeschaltete Verbindungen geführten Verkehrs für jeden Benutzer gemäß einer Reihenfolge der Benutzer, die einer konfigurierbaren Kombination des QoS-Benutzerprofils folgt, vom niedrigsten zum höchsten Prioritätswert und dem durchschnittlichen gemessenen Durchsatz vom höchsten zum niedrigsten Wert (2).

2. Verfahren nach Anspruch 1, wobei, wenn der gemessene Verkehrslastwert in der Benutzerebene gleich oder kleiner als ein zweiter Lastschwellenwert für ein bestimmtes Zeitintervall ist, das Reduzieren des über aufgebaute paketgeschaltete Verbindungen geführten Verkehrs stoppt.

3. Verfahren nach Anspruch 1 oder 2, wobei das Reduzieren von über aufgebaute paketgeschaltete Verbindungen geführtem Verkehr in einer Downlink erfolgt und das Verwerfen von Dienstdateneinheiten von Benutzern des Transport Control Protocol in einem konfigurierbaren Verhältnis beinhaltet.

4. Verfahren nach Anspruch 3, wobei das Verhältnis von verworfenen Dienstdateneinheiten vom Prioritätsparameter des QoS-Profils des Benutzers abhängig ist.

5. Verfahren nach Anspruch 3 oder 4, wobei das Verhältnis von verworfenen Dienstdateneinheiten um einen spezifischen Wert in Abhängigkeit von dem Vergleich zwischen einem bestimmten Lastschwellenwert und dem Verkehrslastwert in der in der Downlink gemessenen Benutzerebene erhöht oder verringert wird.

6. Verfahren nach einem der Ansprüche 1-5, wobei das Reduzieren von über aufgebaute paketgeschaltete Verbindungen geführtem Verkehr in einer Uplink erfolgt und das Verringern des Planens von Benutzern in einer konfigurierbaren Anzahl zugeordneten Gewährungen in Enhanced Dedicated Channels beinhaltet.

7. Verfahren nach Anspruch 6, wobei die Anzahl von geplanten Gewährungen vom Prioritätsparameter des QoS-Profils des Benutzers abhängig ist.

8. Verfahren nach Anspruch 6 oder 7, wobei die Anzahl von geplanten Gewährungen um einen bestimmten Wert je nach dem Vergleich zwischen dem gemessenen Verkehrslastwert in der Benutzerebene in der Uplink und einem bestimmten Lastschwellenwert erhöht oder verringert wird.

9. Verfahren nach einem vorherigen Anspruch, wobei, wenn der Verkehrslastwert in der Steuerebene der RNC gemessen wird und einen Steuerlastschwellenwert übersteigt, das Reduzieren von über aufgebaute paketgeschaltete Verbindungen geführtem Verkehr das Reduzieren der Anzahl von fertigen paketgeschalteten Verbindungsaufbauten beinhaltet, die von den Benutzern mit dem niedrigsten Prioritätsparameterwert angefordert wurden.

10. Verfahren nach Anspruch 9, wobei das Reduzieren der Anzahl von fertigen paketgeschalteten Verbindungsaufbauten das Zurückweisen von Radio Resource Control Verbindungsanforderungen zur Paketumschaltung von den Benutzern für eine bestimmte Zeitperiode beinhaltet.

11. Verfahren nach Anspruch 10, wobei die Zeitperiode je nach dem Prioritätsparameter des QoS-Profils des Benutzers ermittelt wird.

12. Funknetzsteuerung, die Verarbeitungsmittel beinhaltet, die zum Implementieren aller Schritte des Verfahrens zum Reduzieren von Verkehrsstau nach einem vorherigen Anspruch konfiguriert ist.

13. Funknetzsteuerung nach Anspruch 12, die ferner Auslösemittel zum Auslösen eines HSPA-Schedulers in einem Knoten B beinhaltet.

14. Computerprogrammprodukt, das Programmcode umfasst, der bei Ausführung auf Verarbeitungsmitteln einer Funknetzsteuerung bewirkt, dass das Verarbeitungsmittel alle Schritte des Verfahrens nach einem der Ansprüche 1-11 ausführt.

## Revendications

1. Procédé destiné à réduire un encombrement de trafic dans un contrôleur de réseau radio, RNC, qui prend en charge un trafic de données dans un Plan Utilisateur et un Plan de Contrôle, le procédé comprenant les opérations consistant à :
recevoir au moins une requête en vue de l'établissement d'une connexion respective à commutation par paquets provenant d'un utilisateur respectif au niveau du RNC, chaque utilisateur possédant un profil QoS respectif avec des paramètres, englobant la priorité ainsi qu'un débit mesuré moyen ;
mesurer une valeur de charge de trafic dans le RNC ;
comparer la valeur mesurée de la charge du trafic avec au moins un seuil de charge (1), et,
si la valeur mesurée de la charge du trafic dépasse ledit au moins un seuil de charge, réduire le trafic acheminé par l'intermédiaire de connexions établies à commutation par paquets pour chaque utilisateur, en conformité avec un ordre des utilisateurs qui suit une combinaison configurable du profil QoS de l'utilisateur à partir de la valeur la plus faible jusqu'à la valeur la plus élevée en termes de priorité et le débit mesuré moyen à partir de la valeur la plus élevée jusqu'à la valeur la plus faible (2).

2. Procédé selon la revendication 1, si la valeur mesurée de la charge du trafic dans le Plan Utilisateur est égale ou inférieure à un deuxième seuil de charge pendant un certain intervalle de temps, l'opération de réduction du trafic, acheminé par l'intermédiaire de connexions établies à commutation par paquets, va s'arrêter.

3. Procédé selon l'une quelconque des revendications 1 ou 2, la réduction du trafic, acheminé par l'intermédiaire de connexions établies à commutation par paquets, étant effectuée dans une liaison descendante et comprenant la suppression d'unités de données de service provenant d'utilisateurs du protocole de contrôle de transport suivant un taux configurable.

4. Procédé selon la revendication 3, le taux d'unités de données de service supprimées dépendant du paramètre de priorité relatif au profil QoS de l'utilisateur.

5. Procédé selon l'une quelconque des revendications 3 ou 4, le taux d'unités de données de service supprimées étant augmenté ou diminué suivant une valeur spécifique en fonction de la comparaison d'un certain seuil de charge avec la valeur de charge de trafic dans le Plan Utilisateur mesurée en liaison descendante.

6. Procédé selon l'une quelconque des revendications 1 à 5, la réduction du trafic, acheminé par l'intermédiaire de connexions établies à commutation par paquets, étant effectuée dans une liaison montante et comprenant la diminution des autorisations d'ordonnancement dans des canaux dédiés améliorés ayant été attribués à des utilisateurs suivant un nombre configurable.

7. Procédé selon la revendication 6, le nombre d'autorisations d'ordonnancement dépendant du paramètre de priorité relatif au profil QoS de l'utilisateur.

8. Procédé selon l'une quelconque des revendications 6 ou 7, le nombre d'autorisations d'ordonnancement étant augmenté ou diminué suivant une valeur spécifique en fonction de la comparaison de la valeur mesurée de la charge du trafic dans le Plan Utilisateur en liaison montante par rapport à un certain seuil de charge.

9. Procédé selon l'une quelconque des revendications précédentes, si la valeur de la charge de trafic est mesurée dans le Plan de Contrôle du RNC, et dépasse un seuil de charge de contrôle, la réduction du trafic acheminé par l'intermédiaire de connexions établies à commutation par paquets comprenant la réduction du nombre d'établissements achevés de connexions à commutation de paquets demandé par les utilisateurs ayant la valeur la plus faible pour le paramètre de priorité.

10. Procédé selon la revendication 9, la réduction du nombre d'établissements complets de connexions à commutation par paquets comprenant le rejet de requêtes de connexion du contrôle des ressources radio pour une commutation par paquets provenant des utilisateurs pendant un intervalle de temps déterminé.

11. Procédé selon la revendication 10, l'intervalle de temps étant déterminé en fonction du paramètre de priorité relatif au profil QoS de l'utilisateur.

12. Contrôleur de réseau radio comprenant des moyens de traitement configurés de façon à mettre en oeuvre toutes les étapes du procédé destiné à réduire l'encombrement du trafic, tel que cela est énoncé dans l'une quelconque des revendications précédentes.

13. Contrôleur de réseau radio selon la revendication 12, comprenant en outre des moyens de déclenchement pour déclencher un ordonnanceur HSPA dans un noeud B.

14. Produit de programme informatique comprenant des moyens à code de programme qui, au moment de leur exécution sur des moyens de traitement d'un contrôleur de réseau radio, obligent lesdits moyens de traitement à exécuter toutes les étapes du procédé selon l'une quelconque des revendications 1 à 11.
